# EUROPEAN PATENT APPLICATION

(11) **EP 2 770 468 A1**
(43) Date of publication of application: **27.08.2014**
(21) Application number: 13156597.0
(22) Date of filing: 25.02.2013
(51) Int. Cl.: G06Q 20/28

(54) **Method and system of performing a money transfer**

(71) Applicant: Vodafone Holding GmbH, 40549 Düsseldorf (DE)
(72) Inventor: Abril, Jaime, 41564 Kaarst (DE)
(74) Representative: Müller & Schubert

(57) **Abstract**

It is described a method and a system of performing a money transfer over a network or between accounts within a given monetary account system, in particular for performing a transfer of microloans, between SVA (Stored Value Account) entities, which are assigned to an SVA service, in particular method of topping-up an SVA entity with money, wherein on the occurrence of a trigger event a money transfer is effected from a first SVA entity, which serves as a loaning entity, to a second SVA entity, which serves as a receiving entity. In order to provide a solution by which a loaner of money and a receiver of money can be brought into a special relationship such that it is particularly possible to automatically performing a money transfer it is provided that on the occurrence of the trigger event the money transfer is effected from the first SVA loaning entity to such a second SVA receiving entity, that has been set up in a previous authorisation step as a pre-authorised second SVA receiving entity with respect to the first SVA loaning entity.

## Description

The present invention relates to a method of performing a money transfer over a network or between accounts within a given monetary account system according to the preamble of independent claim 1. Furthermore, the present invention relates to a system of performing such a money transfer over a network.

Today person-to-person (p2p) money transfer using prepaid or Stored Value Account (SVA) platforms allows "instant" money transfer between Stored Value Account holders within the same system or within different systems when these are integrated and SVA holder information can be exchanged. p2p works as another top-up mechanism of the SVA, along with cash, credit card, debit card, direct debit and other top-up mechanisms. Today p2p is always triggered by the sender either by own initiative or in response to a request by the receiver. In the latter case, only when there is communication between the sender and receiver, which means that a wired or wireless communication channel must exist and work properly, and the sender is "listening" to the request, p2p can work. This represents a significant limitation to the p2p, especially in emergency situations, when p2p top-up is the only top-up channel available.

The most relevant application of p2p money transfer is when p2p is requested by the receiver to top-up the receiver's SVA. For example this might be the case when a child requests money to her father. Two general approaches are used today to make this possible:
1) The receiver requests money by calling or texting the sender, then the sender transfers the money via p2p money transfer.
2) The p2p money transfer application includes a request function whereby the receiver can request to the sender some money the sender receives a notification comprising the money request. Once the request is approved by the sender the application automatically executes a p2p money transfer for the amount requested.

With any of the above approaches, a communication channel must exist and work properly between sender and receiver and the receiver must be "listening" for incoming notifications. However this might not always be the case. For example, a person A wants to make a payment and has not enough money on the prepaid card. Person A cannot text or call a person B or request money via the p2p application. Other many situations can be thought of where the above conditions for a successful conventional p2p money transfer are not met.

Various different solutions with regard to money transfer exist in the prior art already.

For example, US 8,190,517 B1 describes a system and method for transferring a line of credit balance to a cash account. This known solution provides an automated system being configured to facilitate cash transfers from one or more lines of credit to one or more deposit accounts or payment systems. This solution describes an open-loop system connecting lenders, particularly banks and borrowers in different banks via an ACH (Automated Clearing House).

US 2012/0130783 A1 describes a system and method for immediate issuance of transaction cards, said transaction cards being unassigned, i.e. anonymous transaction cards including a storage medium having a card number encoded thereupon. This document does not disclose a p2p money transfer.

US 2008/0294546 A1 discloses a peer-to-peer method and system. This solution comprises a financing system and method for an online, peer-to-peer lending platform for microfinance. Individual lenders across the world can loan money to specific microenterprises in many countries.

WO 2009/086089 A2 describes a method and system for micro-loan management. The method comprises the steps of advancing funds to a banking customer via an online access interface determining whether access to funds through the line of credit should occur for a customer transaction and providing more preselected increments of funds for the customer transaction.

It is the object of the present invention to avoid the disadvantages in prior art and particularly to provide an option by which a loaner of money and a receiver of money can be brought into special relationship with one another such that it is particularly possible to automatically performing a money transfer.

In accordance with the present invention, this object is solved by the method with the features according to the independent claim 1 and by the system with the features according to the independent claim 12.

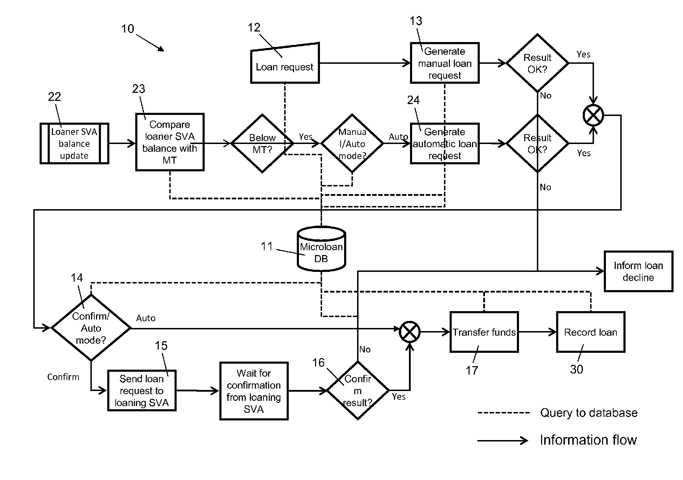

Additional features and details of the present invention become apparent from the dependent claims, from the description and from the drawing. Features and details described in connection with the method according to the first aspect of the invention are, of course, also valid in connection with the system according to the second aspect of the invention, and vice versa.

Pursuant to a first aspect of the present invention the object is solved by a method of performing a money transfer over a network or between accounts within a given monetary account system, in particular for performing a transfer of microloans, between SVA (Stored Value Account) entities, which are assigned to an SVA service, in particular method of topping-up an SVA entity with money, wherein on the occurrence of a trigger event a money transfer is effected from a first SVA entity, which serves as a loaning entity, to a second SVA entity, which serves as a receiving entity. According to the present invention this method is characterized in that on the occurrence of the trigger event the money transfer is effected from the first SVA loaning entity to such a second SVA receiving entity, that has been set up in a previous authorisation step as a pre-authorised second SVA receiving entity with respect to the first SVA loaning entity.

According to the present invention a method of performing a money transfer over a network or between accounts within a given monetary account system is provided. This means that money is electronically sent from a money sender, a so called loaner, to a money receiver. The money transfer is performed via a network or between accounts within a given monetary account system. Such a network, for example, can be a computer network, a communication network and the like. Such given monetary account system, for example, can be a bank account or stored value account system. In particular the present invention is directed to a method of transferring microloans. In general, a microloan or a microcredit is a very small loan.

The method is performed between SVA (Stored Value Account) entities, which are assigned to an SVA service. In particular a stored value account is a monetary account and an SVA service is a card-based based payment system. Generally a specific value of money is assigned to the SVA. Such SVAs are often associated to prepaid-cards and gift cards. The value of money is stored in the SVA, for example, in a card itself or in a network database. When the SVA is used with regard to a money transfer the transferred sum is either subtracted from the SVA, or it is added to the SVA. In the context of this patent application, a Stored Value Account (SVA) - based payment system particularly is a payment method which is linked to a Stored Value Account. This is a monetary account which needs to be topped up from or linked directly to one or several funding sources, e.g. bank account, credit or debit card, and the like, in order to allow payments being made against the SVA funds. In particular, a SVA-based payment system requires a physical or virtual card to make payments at Point of Sale (POS) terminals in a physical store or in internet stores. Frequently an SVA-based payment system is associated with prepaid payment cards. SVA-based payment systems can be open-loop or closed-loop. Open-loop systems allow payments at any merchant adhered to a particular network scheme such regular credit cards. Closed-loop systems allow payments only within a particular merchant store. Such systems are typically merchant gift cards

In particular, the method according to the present invention is a method of topping-up an SVA entity with money.

The method according to the present invention starts on the occurrence of a trigger event. A trigger event generally is an event that activates the procedure of the money transfer. For example, the trigger event can be a request, or it can be a specific situation or a state or an occasion or an event. The present invention is not limited to specific types of trigger events. Some advantageous types of trigger events are described in more detail further below.

Once such a trigger event has occurred, a money transfer is effected from a first SVA entity, which serves as a loaning entity, to a second SVA entity, which serves as a receiving entity. In particular, an SVA entity according to the present invention is a physical card or a card functionality which could be interpreted as some kind of a virtual card. In the latter case the card functionality can be stored in a network database or it can be provided by a network data processing unit, a server for example. It is also possible that the SVA entity can be implemented in an electronic device, for example, in a mobile phone. In the latter case the SVA entity can comprise said electronic device as well. A loaning entity generally is an SVA entity that loans money to one or several receiving SVA entities. A receiving SVA entity which can be interpreted as a loaner entity, receives money from one or several loaning SVA entities.

In particular the method according to the present invention is adapted of performing a person-to-person (p2p) money transfer. Same applies to the system according to the present invention which is described further below. This allows person-to -person payments based on an SVA-based payment system, whereby an account holder can send money to another account holder in real-time, by moving funds from the sending SVA entity to the receiving SVA entity. In case that the SVA entity comprises a mobile phone, the user experience can be as simple as sending an SMS if the SVA identifier is the telephone number.

On the occurrence of the trigger event the money transfer is effected from the first SVA loaning entity to such a second SVA receiving entity, that has been set up in a previous authorisation step as a pre-authorised second SVA receiving entity with respect to the first SVA loaning entity. This means that the money transfer is performed to such SVA receiving entities only which have been previously defined as authorised SVA receiving entities. The user of the first loaning SVA entity can pre-authorise such second SVA receiving entities which are allowed to loan money from him. Furthermore the user can determine the circumstances under which a money transfer is performed. Preferred embodiments how this can be achieved are described in detail further below.

With the solution of the present invention, no communication between sender and receiver or receiver needed to be "listening" is needed to execute a money transfer needed to top-up an SVA with a low balance condition or make a purchase in a pass-through mode when no other funding mechanism is available.

Within a Stored Value Account (SVA) or Prepaid Card program all account holders have a Stored Value Account they can use to make payments using conventional mag stripe, CHIP & PIN or contactless cards or mobile NFC devices. The Stored Value Account can be topped up from several funding sources e.g. direct debit to bank account, debit card, credit card, wire transfer, cash, and the like. The account holders can transfer money between them instantly using peer-2-peer (p2p) payments between SVAs. The account holders can query the balance of their SVA and receive notifications when payments or top-ups are made, including p2p, and/or upon certain balance conditions. Microloans can be enabled using p2p payments in combination with a preauthorisation mechanism.

The solution according to the present invention particularly improves current person-to-person payment features by allowing automatic "receive money into" or top-up of a stored value account with a microloan from a loaning stored value account. There is no need for requesting money, but money can be drawn whenever the account has been pre-authorised by the loaning account. Furthermore, there is no need for internet connectivity, radio coverage for the requesting party. Moreover, there is no need for confirming money requests, and therefore, there is no need for internet connectivity, radio coverage for the requested party. The solution according to the present invention enriches the utility of existing person-to-person payment solutions with automatic microloans or pre-authorised credit lines enabling crowdfunding or family&friends microloaning.

In a preferred embodiment, during said previous authorisation step, a second SVA receiving entity is selected. The selected second SVA receiving entity is set up as a pre-authorised second SVA receiving entity with respect to the first SVA loaning entity, and the pre-authorised second SVA receiving entity is allocated to the first SVA loaning entity. In particular this activity is performed on the first SVA loaning entity holder's side.

In a preferred embodiment, on the occurrence of the trigger event, the money transfer from the first SVA loaning entity to the pre-authorised second SVA receiving entity is effected automatically.

In addition or as an alternative, on the occurrence of the trigger event a confirmation request for confirming the execution of the money transfer is transmitted to the first SVA loaning entity. When the confirmation has taken place the money transfer is effected. In this case the money transfer can be effected only if the request has been confirmed. Alternatively, the money transfer from the first SVA loaning entity to the pre-authorised second SVA receiving entity is effected automatically if the confirmation request cannot be finished successfully. In case that the trigger event for performing the money transfer is a request which is sent or activated by the holder of the second SVA receiving entity, the request message can come from the back end, a data processing unit for example which is assigned to the network.

In a preferred embodiment, an application module is assigned to the first SVA loaning entity, by use of said application module adjustments with regard to the money transfer are generated and/or second SVA receiving entities are pre-authorised, and/or an application module is assigned to the second SVA receiving entity, by use of said application module adjustments with regard to the money transfer are generated. This application module can be a management user interface, in particular a microloans management user interface, or it can act as such an interface. This interface can be a mobile application running on a mobile device, an interactive webpage or a standalone programme running on a computer. Or, it can be a module within the SVA-based payment system mobile application, interactive webpage or standalone programme. In particular, the application shall allow performing the following groups of operations: Manage microloans settings such as Loaning amounts, master mode and master switch, Loaner amounts and mode, loaning accounts priority; Request microloan (MANUAL loaner mode); Confirm microloan (CONFIRM loaning mode); Repay microloan; Cancel microloan; View /Export microloan lists, loaning lists and loaner lists, for example with buttons to request, confirm, repay and cancel microloans.

In a preferred embodiment, the first SVA loaning entities and the pre-authorised second SVA receiving entities being assigned thereto, and optionally those adjustments with regard to the money transfer and/or loan records, are stored in a database which can be accessed via the network, in particular in a database being assigned to said network. The database, which is in particular a microloan database, can be a separate new database or can be a new set of tables in a existing SVA-based payment system database.

In particular the database can comprise the following tables.

With regard to limits the database can comprise a table, said table can comprise one or more of the following fields:
- SVA Account Id (Key)
- Total Loaning Amount (L)
- Available Loaning Amount (AL)
- Master Loaning Mode (AUTOMATIC / CONFIRM) (LM)
- Master Loaning Switch (ON / OFF) (LS)
- Total Loaner Amount (M)
- Available Loaner Amount (AM)
- Loaner Mode (AUTOMATIC / MANUAL) (MM)
- Loaner Mode Parameters (Threshold, Time Schedule, etc.) (MT)

With regard to pre-authorisation the database can comprise a table, said table can comprise one or more of the following fields:
- Loaning SVA Account Id (Key) (i)
- Pre-authorised Receiving SVA Account Id (Key) (j)
- Loaning Amount to pre-authorised SVA (L_i,j)
- Available Loaning Amount to pre-authorised SVA (AL_i,j)
- Loaning Mode (AUTOMATIC / CONFIRM) (LM_i,j)
- Loaning Switch (ON / OFF) (LM_i,j)
- Loaning SVA Account Priority (0=Won't use, 1=1st priority, ...)

With regard to microloans the database can comprise a table, said table can comprise one or more of the following fields:
- Microloan Id (Key)
- Loaning SVA Account Id (Key)
- Pre-authorised Receiving SVA Account Id (Key)
- Loan Date (mDT)
- Loan Amount (mA)
- Loan Service Fee (mF)
- Outstanding Debt Amount (mODA)
- Loan Status (OPEN, CANCELLED, CLOSED) (mS)

With regard to microloan repayments the database can comprise a table, said table can comprise one or more of the following fields:
- Microloan Repayment Id (Key)
- Microloan Id (Key)
- Microloan Repayment Date (rDT)
- Microloan Repayment Amount (rA)

In a preferred embodiment a data processing unit is assigned to said network and the money transfer is triggered via said data processing unit. This data processing unit can be the backend unit as mentioned further above as well as further below.

According to a preferred embodiment the second SVA receiving entities, in particular by use of the data processing unit, are checked with regard to their balance conditions, and in particular that the second SVA receiving entities are checked whether the balance conditions have reached a defined threshold, or that it is checked whether the amount of money needed for a payment procedure is available on the second SVA receiving entity. In particular, this embodiment covers an "automatic" mode. However, according to the present invention a "manual" mode can be performed as well. This is, the receiving SVA account holder could request a microloan manually to a loaning SVA regardless of the balance conditions of the receiving SVA.

In particular, if the second SVA receiving entity does not comprise sufficient balance conditions, a money transfer from the first SVA loaning entity to the second SVA receiving entity is automatically effected, in particular on the basis of such adjustments with regard to the money transfer. For example, the money transfer will happen only if the loan amount requested is below the total available loaning amount on the first SVA loaning entity and is below the loaning amount available to that particular receiving SVA entity.

According to another preferred alternative, if the second SVA receiving entity does not comprise sufficient balance conditions a money transfer request is transmitted to the first SVA loaning entity, in particular via said data processing unit.

In particular, if the second SVA receiving entity does not comprise sufficient balance conditions, the data processing unit accesses the database and that the money transfer request is matched with the contents of said database.

According to preferred embodiments, the money transfer is effected such that money is transferred from the first SVA loaning entity to the second SVA receiving entity, or that a money transfer is passed from the first SVA loaning entity through the second SVA receiving entity to a third parties account. According to these embodiments, two different modes can be realized. The first mode is an automatic top-up mode. In this mode the first SVA loaning entity is used as a top-up channel. In the second mode which is the pass-through mode, the first SVA loaning entity can be used as the payment card.

According to the second aspect of the present invention a system of performing a money transfer over a network or between accounts within a given monetary account system, in particular for performing a transfer of microloans, between SVA (Stored Value Account) entities, which are assigned to an SVA service, is provided said system comprising a number of first SVA entities, which serve as loaning entities, and a number of second SVA entities, which serve as a receiving entities, said system further comprising a database which can be accessed via the network, said database comprising data with regard to SVA loaning entities, pre-authorised second SVA receiving entities being assigned thereto, and optionally adjustments with regard to the money transfer.

It is preferred that the system further comprises a data processing unit, said data processing unit being adapted for triggering the money transfer from a first SVA loaning entity to a second SVA receiving entity.

According to a preferred embodiment at least one application module is provided said application module being assigned to the first SVA loaning entity, by use of said application module adjustments with regard to the money transfer are generated and/or second SVA receiving entities are pre-authorised, and/or at least one application module is provided said application module being assigned to the second SVA receiving entity, by use of said application module adjustments with regard to the money transfer are generated.

Preferably the system comprises means for carrying out the aforementioned method according to the first aspect of the present invention. Therefore, with regard to the disclosure of system full reference is made to the entire description of the method according to the first aspect of the present invention.

In particular, the new technical/functional feature of the present invention is "credit or top-up pre-authorisation from an existing SVA entity to at least one other existing SVA entity. To implement this feature the following elements are preferred:
- A database, particularly a dual-index database which contains the credit or top-up pre-authorised Stored Value Account entities for every existing SVA, including the pre-authorised amount for every pre-authorised SVA, credit outstanding, loan priority list and the like;
- An Auto top-up logic, which triggers automatically top-ups upon a low-balance condition. This logic will take into account the loaner SVAs as well as the loan priority list. The logic can be some kind of a loan manager in form of a backend implementation. This logic can be part of a data processing or backend unit which is assigned to the network;
- A loan application module, within the SVA application. To request loaner SVAs, set the loan priority list, manually request a loan, configure the auto top-up logic, approve loans, cancel loans, query loans and the like.

Microloans can be enabled using payments, particularly p2p payments, in combination with a preauthorisation mechanism. This can be illustrated by means of a general example:

Say account holder A wants to loan money to account holders X and Y. A will preauthorise p2p send transactions for an amount up to a limit Ax for account holder X and Ay for account holder Y, whenever certain overall loan amount A is not exceeded and overall available balance is greater than B. Say account holder X wants to borrow money from A, he/she will request to borrow money from A, for example via SMS, mobile app, web or any other mobile channel, in a certain amount Ax'. X can see the account holders that would loan money to him/her in a list, and the limit amount from each loaner. The loan request will be directed to the back end loan manager application and will check business rules e.g. Ax' <= Ax AND Ax' <= A AND Overall Available Balance > B. The loan manager application will then send a SMS or notification to the loaner account holder asking for confirmation to proceed with the loan (confirm mode). According to a preferred embodiment, an option is available to skip this notification and to proceed straight away without loaner account holder confirmation, what is defined as an automatic mode. After confirmation is done, the back end payment processor will perform a p2p send transaction from account holder A's SVA to account holder X's SVA in the amount of Ax. A SMS or notification will be sent to both account holders that the transaction has taken place and funds have been transferred. The limit Ax will be reduced to Ax - Ax', being the new loan limit for X from A. The overall limit A will also be reduced to A - Ax'. A loan record will be created by the load manager application, with date, time, loaner, borrower, amount loaned and outstanding loan balance to be repaid. The loan record will be visible to both account holders A and X under a credit/debit balance & history screen for the AX relationship. X will be able to repay the loan in one or several p2p transactions via a repay loan option/button. A will be able to waive partially or totally the outstanding loan balance to be repaid. Loan repayment and loan waive transactions will be recorded accordingly. Fixed and/or interest amounts can be applied to the loans.

A number of different operations can be triggered either by the first SVA loaning entity or by the second SVA receiving entity. For example, both entities can perform the following operations: Set overall loaning amount limits, mode and switch, loaner amount limit and mode, loaning accounts priority. For example, the first SVA loaning entity can perform the following operations: Pre-authorise receiving SVA, including setting loaning amount limit and loaning mode; Confirm loan request (Loaning mode = CONFIRM); Automatic loan request confirmation (Loaning mode = AUTOMATIC); Cancel microloan. For example the second SVA receiving entity can perform the following operations: Manual loan request (Loaner mode = MANUAL), Create microloan; Automatic loan request (upon balance condition or time schedule condition) (Loaner mode = AUTOMATIC), Create microloan; Repay microloan; Close microloan (with last repayment).

For a better understanding of the present invention, a preferred embodiment of the present invention will now be described by way of an example with reference to the description and the accompanying drawing, in which the sole figure depicts a schematic flow chart showing a request and confirm procedure with regard to the method of performing a money transfer.

The figure depicts a system 10 of performing a money transfer over a network, in particular of performing a transfer of microloans.

There are two options of performing such a money transfer. Both options have in common that a first SVA loaner entity has pre-authorised second SVA receiver entities. A money transfer can take place only between the first SVA loaner entity and a pre authorised second SVA receiver entity.

The system 10 comprises a database 11 which contains all necessary data with regard to the performance of a money transfer.

According to a first option a loan request 12 is generated. In step 13, this loan request is generated manually. If the results of this request are OK a confirmation message is created in step 14. In step 15, the confirmation message is sent to the first SVA loaning entity where it is confirmed in step 16. If the confirmation is positive, the microloan funds are transferred in step 17. Otherwise a message is generated that the loan request has been declined.

According to a second option the money transfer is performed automatically. With regard to the second SVA receiving entity which is a loaner SVA a balance update is generated in step 22. In a data processing unit which functions as a backend unit, the estimated balance of the second SVA receiver entity is compared to a threshold value MT during a comparison step 23. Is the Balance below said threshold value an automatic loan request is generated in step 24. If the results of this request are OK a confirmation message is created in step 14, and the microloan funds are automatically transferred in step 17.

In both options a loan record can be generated in a loan record step 30, said loan record comprising all information with regard to the money transfer. During the money transfer procedure different queries can be made at database 11.

With regard to the different steps to be performed during the money transfer procedure, the following steps can be performed:

### Generate manual loan request:

- Input: loaning SVA_i, loaner SVA_j, amount
- Process: check if AL_i >= mA AND AL_i,j >= mA AND LM_i=ON AND LM_i,j=ON
- Output: loaning SVA_i, amount if check result OK, else Not OK

### Generate automatic loan request:

- Input: loaner SVA_j balance < MT = TRUE
- Process: for all loaning SVA_i to loaner SVA_j by order of loaning priority 0 check if AL_i >= mA AND AL_i,j >= mA AND LM_i=ON AND LM_i,j=ON and exit as condition is met
- Output: loaning SVA_i, amount if check result OK, else Not OK

### Send loan request to loaning SVA:

- Input: loaning SVA_i, loaner SVA_j, amount
- Process: send message to loaning SVA_i Microloans Mgt User Interface asking to confirm loan request and capture response: Confirmed, Declined, Not replied
- Output: confirmation result: Confirmed, Declined, Not replied

### Transfer funds:

- Input: loaning SVA_i, loaner SVA_j, amount
- Process: move funds from loaning SVA_i to loaner SVA_j
- Output: OK / Not OK

### Record loan:

- Input: date, loaning SVA_i, loaner SVA_j, amount
- Process: create microloan record in microloans database
- Output: OK / Not OK

### Inform loan decline:

- Input: loaner SVA_j, decline_reason_code
- Process: send message to loaner SVA_j Microloans Mgt User Interface informing that the loan request has been declined
- Output: decline message: insufficient credit, loaning switched off, loan declined by Loaning entity, loan declined for loaning entity not being reachable, etc.

### Reference Numerals

| | |
|---|---|
| 10 | System |
| 11 | Database |
| 12 | Loan Request |
| 13 | Manual loan request generation step |
| 14 | Confirmation generation step |
| 15 | Transfer of confirmation message step |
| 16 | Confirmation step |
| 17 | Transfer of microloan step |
| 22 | Balance update step |
| 23 | Comparison step |
| 24 | Automatic loan request generation step |
| 30 | Loan record step |

## Claims

1. A method of performing a money transfer over a network or between accounts within a given monetary account system, in particular for performing a transfer of microloans, between SVA (Stored Value Account) entities, which are assigned to an SVA service, in particular method of topping-up an SVA entity with money, wherein on the occurrence of a trigger event a money transfer is effected from a first SVA entity, which serves as a loaning entity, to a second SVA entity, which serves as a receiving entity,
**characterized in that**
on the occurrence of the trigger event the money transfer is effected from the first SVA loaning entity to such a second SVA receiving entity, that has been set up in a previous authorisation step as a pre-authorised second SVA receiving entity with respect to the first SVA loaning entity.

2. The method according to claim 1, **characterized in that** during the previous authorisation step, a second SVA receiving entity is selected, that the selected second SVA receiving entity is set up as a pre-authorised second SVA receiving entity with respect to the first SVA loaning entity and that the pre-authorised second SVA receiving entity is allocated to the first SVA loaning entity.

3. The method according to claim 1 or 2, **characterized in that** on the occurrence of the trigger event the money transfer from the first SVA loaning entity to the pre-authorised second SVA receiving entity is effected automatically, or that on the occurrence of the trigger event a confirmation request for confirming the execution of the money transfer is transmitted to the first SVA loaning entity.

4. The method according to anyone of claims 1 to 3 **characterized in that** an application module is assigned to the first SVA loaning entity, by use of said application module adjustments with regard to the money transfer are generated and/or second SVA receiving entities are pre-authorised, and/or that an application module is assigned to the second SVA receiving entity, by use of said application module adjustments with regard to the money transfer are generated.

5. The method according to anyone of claims 1 to 4, **characterized in that** the first SVA loaning entities and the pre-authorised second SVA receiving entities being assigned thereto, and optionally those adjustments with regard to the money transfer, are stored in a database which can be accessed via the network, in particular in a database being assigned to said network.

6. The method according to anyone of claims 1 to 5 **characterized in that** a data processing unit is assigned to said network and that the money transfer is triggered via said data processing unit.

7. The method according to anyone of claims 1 to 6 **characterized in that** the second SVA receiving entities, in particular by use of the data processing unit, are checked with regard to their balance conditions, and in particular that the second SVA receiving entities are checked whether the balance conditions have reached a defined threshold, or that it is checked whether the amount of money needed for a payment procedure is available on the second SVA receiving entity.

8. The method according to claim 7 **characterized in that** if the second SVA receiving entity does not comprise sufficient balance conditions, a money transfer from the first SVA loaning entity to the second SVA receiving entity is automatically effected, in particular on the basis of such adjustments with regard to the money transfer.

9. The method according to claim 7, **characterized in that** if the second SVA receiving entity does not comprise sufficient balance conditions a money transfer request is transmitted from the second SVA receiving entity to the first SVA loaning entity, in particular via said data processing unit.

10. The method according to claim 9 as being dependent from claim 6 **characterized in that** if the second SVA receiving entity does not comprise sufficient balance conditions, the data processing unit accesses the database and that the money transfer request is matched with the contents of said database.

11. The method according to anyone of claim 1 to 10 **characterized in that** the money transfer is effected such that money is transferred from the first SVA loaning entity to the second SVA receiving entity, or that a money transfer is passed from the first SVA loaning entity through the second SVA receiving entity to a third parties account.

12. A system (10) of performing a money transfer over a network or between accounts within a given monetary account system, in particular for performing a transfer of microloans, between SVA (Stored Value Account) entities, which are assigned to an SVA service, said system comprising a number of first SVA entities, which serve as loaning entities, and a number of second SVA entities, which serve as a receiving entities, said system further comprising a database (11) which can be accessed via the network, said database comprising data with regard to SVA loaning entities, pre-authorised second SVA receiving entities being assigned thereto, and optionally adjustments with regard to the money transfer.

13. The system according to claim 12, **characterized in that** the system further comprises a data processing unit, said data processing unit being adapted for triggering the money transfer from a first SVA loaning entity to a second SVA receiving entity.

14. The system according to claim 12 or 13 **characterized in that** at least one application module is provided said application module being assigned to the first SVA loaning entity, by use of said application module adjustments with regard to the money transfer are generated and/or second SVA receiving entities are pre-authorised, and/or that at least one application module is provided said application module being assigned to the second SVA receiving entity, by use of said application module adjustments with regard to the money transfer are generated.

15. The system according to anyone of claims 12 to 14, **characterized in that** the system has means for carrying out a method according anyone of claims 1 to 11.
